# FASCICULE DE BREVET EUROPEEN

(11) **EP 3 275 727 B1**
(45) Date de publication et mention de la délivrance du brevet: **16.06.2021**
(21) Numéro de dépôt: 17182000.4
(22) Date de dépôt: 19.07.2017
(51) Int. Cl.: B60N 3/02

(54) **DISPOSITIF DE POIGNÉE DE MAINTIEN À ENTRETOISE**
HALTEGRIFF-VORRICHTUNG MIT ABSTANDSELEMENT
HOLDING HANDLE DEVICE WITH SPACER

(30) Priorité: 27.07.2016 FR 1657204
(43) Date de publication de la demande: 31.01.2018
(73) Titulaire: PSA Automobiles SA, 78300 Poissy (FR)
(72) Inventeur: MONIER, Didier, 25600 Vieux Charmont (FR)

(56) Documents cités:
- EP-A1- 1 493 653
- US-A1- 2007 267 884
- US-A1- 2008 111 389
- US-A1- 2011 049 923

## Description

### DOMAINE TECHNIQUE

L'invention se rapporte à un dispositif de poignée de maintien à entretoise pour véhicule automobile, ce dispositif permettant une fixation aisée de la poignée pour les différents types d'architecture de montants et de structure de toit dans lesquels la poignée peut être montée.

Cette invention concerne le domaine de la fixation des équipements intérieurs des véhicules automobiles. Dans ce domaine, les poignées intérieures servent au maintien des passagers, par exemple en cas de trajet sinueux ou de freinage du véhicule. Chacune de ces poignées est en général fixée en hauteur dans les montants ou renforts latéraux du plafond de toit dans la structure d'habitacle d'un véhicule automobile.

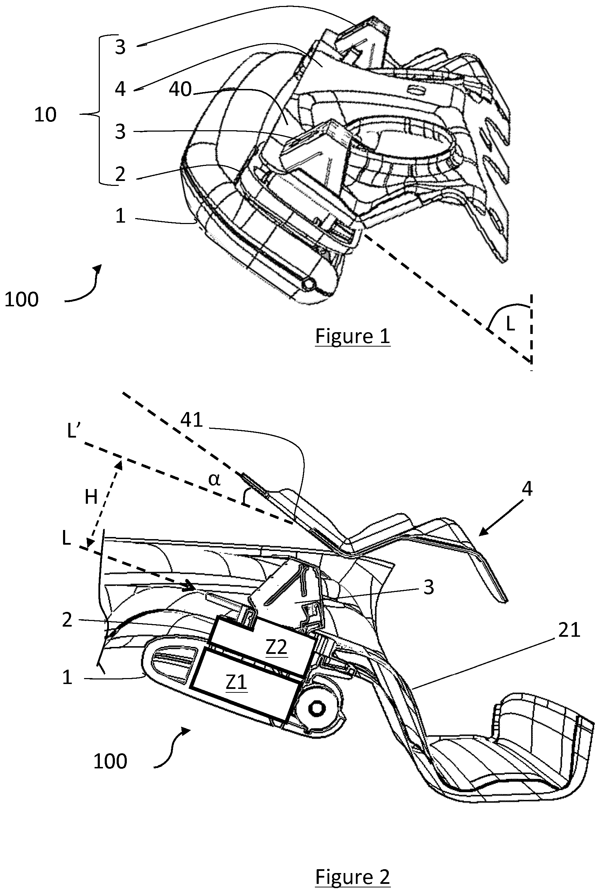

Un dispositif de poignée de maintien conventionnel est présenté sur la figure 1. Ce dispositif de poignée de maintien 100 est en général constitué d'une poignée rembourrée de préhension 1 et d'une partie de fixation 10 comportant une embase 2 sur laquelle est articulée la poignée 1 et d'une pièce de structure interne 4 destinée à être soudée dans un montant de toit du véhicule automobile. Une paroi plane de fixation 40 de la pièce de structure 4 présente des orifices 41 (cf. figure 2) pour passer à travers des agrafes 3 venant de l'embase 2 et ainsi clipser la pièce de structure interne 4 sur l'embase 2 par ces agrafes 3. La pièce de structure interne 4 repose alors dans un plan « L » d'interface avec l'embase 2.

### ÉTAT DE LA TECHNIQUE

Selon la corpulence du passager qui se tient à une poignée de maintien, cette poignée peut se déformer dans le temps. Pour pallier ce problème, le document US 8 931 818 présente une poignée de maintien équipée de deux couples de deux pattes de maintien, deux pour chacun des côtés de la poignée dont les extrémités sont ajourées pour supporter une forte traction sans que la poignée se déforme. La partie ajourée des extrémités permet d'absorber efficacement la force d'impact de cette force traction.

Par ailleurs, le document de brevet US 8 439 392 présente une autre amélioration concernant la fixation adjacente de générateurs de gaz d'airbags et de poignées de maintien sur un même montant latéral de véhicule automobile. Cette coexistence est réalisée au moyen d'une plaque insérée entre chaque poignée de maintien et la carrosserie du véhicule. Le document US 2007/267884 A1 divulgue un dispositif de poignée de maintien de véhicule automobile composé d'une poignée et d'une partie de fixation comportant une embase et une pièce de structure interne destinée à être fixée dans une garniture de structure d'habitacle du véhicule.

En outre, de plus en plus de véhicules automobiles comportent des toits vitrés: des toits ouvrants classiques, des toits ouvrants panoramiques ou des toits panoramiques ne s'ouvrant pas. L'architecture des toits vitrés peut alors devenir complexe car les toits vitrés imposent une plus grande épaisseur aux montants latéraux supportant les fixations des poignées de porte, ce qui éloigne la poignée de la structure sur laquelle cette poignée est fixée.

### EXPOSÉ DE L'INVENTION

Aucune solution ne paraît adaptée dans l'état de la technique pour permettre une fixation fiable d'une poignée de maintien sur des montants ou renforts variés, en particulier sur des garnitures de renfort épaissies.

L'invention vise précisément à permettre une telle fixation et, pour ce faire, elle prévoit de prolonger le système d'accrochage de la poignée sur la pièce de fixation interne à la structure d'habitacle.

A cet effet, la présente invention a pour objet un dispositif de poignée de maintien de véhicule automobile composé d'une poignée et d'une partie de fixation comportant une embase et une pièce de structure interne destinée à être fixée dans une garniture de structure d'habitacle du véhicule. La partie de fixation comporte également une entretoise agencée entre l'embase et la pièce de structure interne. Des moyens de fixation relient une paroi de fond de l'entretoise à l'embase et une paroi de prolongement de l'entretoise à la pièce de structure interne, les parois de fond et de prolongement étant distantes et orientées l'une par rapport à l'autre de sorte que la pièce de structure interne est agencée dans une position de solidarisation compatible avec la structure d'habitacle du véhicule, des ouvertures étant formées dans les faces latérales de l'entretoise afin d'apporter de la souplesse à l'entretoise, la paroi de fond de l'entretoise présente des ouvertures, de sorte que l'embase peut se clipser sur l'entretoise de la même façon que l'entretoise se clipse sur la pièce de structure interne, l'entretoise présente entre des parois de fond et de prolongement sensiblement planes une distance et un angle tels que cette distance est sensiblement égale à une distance de solidarisation de la pièce de structure interne définie entre un plan de solidarisation et un plan d'interface entre l'entretoise et l'embase;

Cette entretoise permet avantageusement de fixer un dispositif de poignée sur sa pièce de structure interne dans le cas où une épaisseur de garniture intérieure est ajoutée entre l'embase et la pièce de structure interne, en particulier en raison de la présence d'un toit vitré.

Selon des formes de mise en œuvre avantageuses:
- les moyens de fixation de l'entretoise sur la pièce de structure interne comportent des clips de fixation venant de l'entretoise couplés à des ouvertures pratiquées dans la pièce de structure interne;
- l'entretoise comporte également au moins un centreur traversant pièce de structure interne par des ouvertures afin de limiter la déformation de la poignée jusqu'à sensiblement 100 Kgf ;
- la distance de solidarisation est minimale entre un bord de paroi plane de fixation de la pièce de structure interne et le plan d'interface;
- l'entretoise loge une plaque métallique présentant des ouvertures superposées aux ouvertures de la paroi de fond de l'entretoise de sorte que l'embase est également clipsée sur la plaque métallique;
- l'entretoise a une structure choisie entre alvéolaire, nervurée et multicouche, par exemple en matériau composite.

L'invention se rapporte également à un véhicule automobile équipé d'**au moins** un dispositif de poignée de maintien tel que défini ci-dessus.

Dans le présent texte, les qualificatifs « externe » et « interne» se rapportent aux localisations d'éléments positionnés en utilisation standard à l'intérieur ou à l'extérieur de l'habitacle d'un véhicule. Sur les figures, des éléments identiques ou analogues sont repérés par un même signe de référence qui renvoie au(x) passage(s) de la description qui le mentionne(nt).

### PRÉSENTATION DES FIGURES

D'autres données, caractéristiques et avantages de la présente invention apparaîtront à la lecture de la description non limitée qui suit, en référence aux figures annexées qui représentent, respectivement :
- la figure 1, une vue en perspective d'un dispositif de poignée de maintien selon l'état de la technique (déjà commentée);
- la figure 2, une vue du dispositif de poignée de maintien de la figure 1, installé sur une structure interne de toit présentant une garniture de toit vitré;
- la figure 3, une vue en perspective d'un exemple de dispositif de poignée de maintien selon l'invention;
- la figure 4, une vue du dispositif de poignée de maintien de la figure 3 installé sur une structure de toit présentant une garniture de toit vitré, et
- les figures 5a à 5d, des étapes du montage d'une entretoise selon l'invention.

### DESCRIPTION DÉTAILLÉE

La figure 2 présente une vue du dispositif de poignée de maintien 100 de la figure 1 installé sur une garniture intérieure de toit vitré 21 via sa structure interne de toit 4. La base de l'agrafe 3 qui s'étend dans le plan d'interface « L » de l'embase 2 (cf. également la figure 1) est séparée des ouvertures 41 de cette pièce 4 par une distance « H », pouvant être supérieure à la hauteur de l'agrafe 3 comme illustré sur cette figure.

Cette séparation est due à l'encombrement de la garniture intérieure 21 qui s'étend à proximité de la structure interne de toit 4 en raison à la présence d'un toit vitré (non représenté). Cette architecture empêche alors la fixation directe de l'agrafe 3 de l'embase 2 de la poignée de maintien 1 sur la structure interne de toit 4. Les zones Z1 et Z2 indiquent les emplacements des mécanismes de structure intérieure respectivement de la poignée de maintien 1 et de l'embase 2.

La garniture intérieure 21 impose ainsi deux contraintes majeures à l'installation du dispositif de poignée 100 : d'une part la distance « H » entre le plan « L » à la base des agrafes 3 et le plan « L' » dans lequel s'étend globalement la pièce de structure interne de toit 4 passant par les ouvertures 41; et d'autre part un changement d'orientation d'angle « α » entre les plans « L » et « L' ».

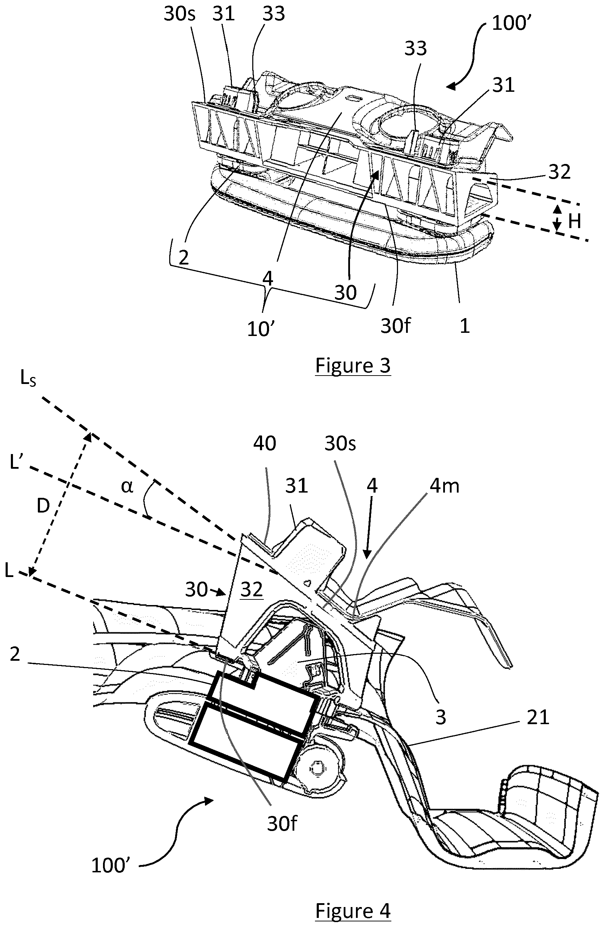

Ces contraintes de distance « H » et d'angle d'orientation « α » sont supprimées au moyen d'une entretoise selon l'invention telle que présentée en référence à la figure 3, cette figure 3 illustrant une vue en perspective d'un dispositif de poignée de maintien 100' selon l'invention.

Sur la figure 3, la partie de fixation 10' de la poignée de maintien 100' selon l'invention comporte, en plus des éléments de la poignée 100 - principalement l'embase 2 et la pièce de structure de toit 4 (cf. figure 1) - une entretoise 30 agencée entre l'embase 2 et la pièce de structure interne 4. Une telle entretoise 30 est conformée pour prolonger l'embase 2 en épaisseur, entre les parois de fond 30f et de prolongement 30s, et en inclinaison pour venir se fixer sur la pièce de structure interne 4 en position de solidarisation sur la structure de garniture intérieure 21 (cf. figure 2) dans un plan Ls (cf. figure 4), sans écart de distance ni d'écart angulaire.

L'entretoise 30 réalise alors une fixation sûre et fiable du dispositif de poignée 100' sur sa pièce de structure interne 4 au moyen, d'une part, de son épaisseur ajoutée à la partie fixation 10' et, d'autre part, au moyen d'un rattrapage angulaire de l'angle « α » (cf. figure 2) qui se traduit par la section trapézoïdale de ses parois latérales 32.

Cette entretoise 30 dispose de clips 31 pour être fixée sur la pièce de structure interne 4 au travers des ouvertures 41 (cf. figure 2). De plus, l'entretoise 30 présente une structure alvéolaire qui lui apporte de la légèreté sans diminuer sa rigidité.

En outre, deux centreurs 33 complètent la liaison entre l'entretoise 30 et la pièce de structure interne 4. De tels centreurs 33 permettent de limiter la déformation de la poignée jusqu'à sensiblement 100 Kgf. Le nombre et la répartition de ces centreurs 33 sont adaptés en fonction des contraintes mécaniques locales de l'implantation du dispositif 100'.

La figure 4 présente une vue du dispositif de poignée de maintien 100' de la figure 3 une fois installé par sa structure de toit 4 dans la garniture intérieure de toit vitré 21. L'entretoise 30 présente une paroi de prolongement 30s inclinée selon l'angle « α » de rattrapage angulaire par rapport à la paroi de fond 30f - ou les plans parallèles « L » ou « L' » - et une distance variable « D » entre ces parois telles que, à la fois, sa paroi de fond 30f est positionnée sans écart contre l'embase 2, et sa paroi de prolongement 30s est positionnée sans écart contre la pièce de structure interne 4.

Dans ces conditions, la distance « D » entre les parois 30f et 30s est sensiblement égale à la distance de solidarisation de la pièce de structure intérieure 4 telle que définie entre un plan de solidarisation « Ls » et le plan d'interface « L » entre l'entretoise 30 et l'embase 2. Cette distance de solidarisation est de préférence minimale entre le bord 4m de la paroi plane 40 de la pièce de structure intérieure 4 qui se trouve au plus près du plan d'interface « L ».

Les agrafes 3 de l'embase 2 fixent la poignée 1 sur l'entretoise 30 par clipsage via des orifices 35 pratiqués dans l'entretoise 30 comme illustré par les figures qui suivent.

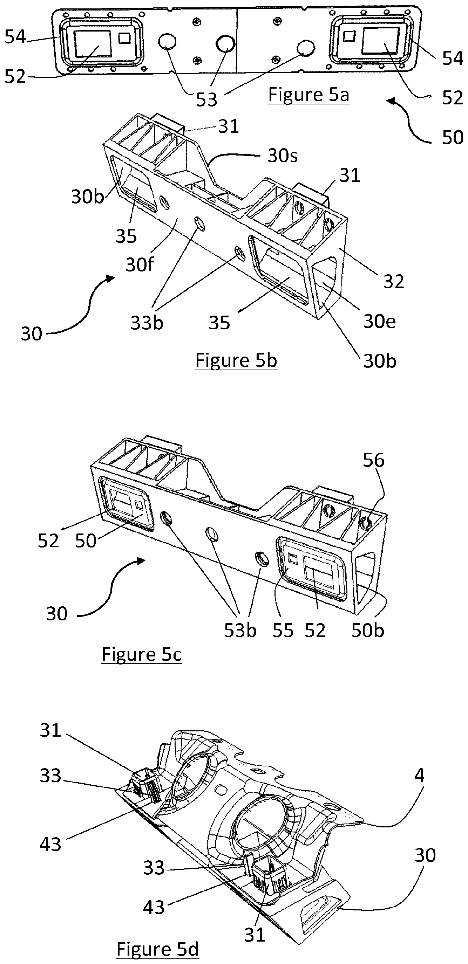

Les figures 5a à 5d présentent les étapes principales de montage de l'entretoise 30. Ce montage commence par l'usinage d'une plaque métallique 50 dans laquelle sont détourées deux ouvertures 52 (figure 5a). Ces ouvertures 52 sont destinées à l'ancrage des agrafes 3 de l'embase 2 par clipsage sur la plaque métallique 50. Cette plaque métallique 50 comporte également des ouvertures 53 pour l'insertion des centreurs 33 (cf. figure 3). De plus, autour des ouvertures 52, deux cadres nervurés 54 servent à positionner la plaque métallique 50 dans l'entretoise alvéolaire 30 présentée en référence à la figure 5b.

Une autre étape de montage de l'entretoise 30 consiste à réaliser une pièce alvéolaire en matériau plastique surmoulé. Cette pièce alvéolaire présente une paroi de fond 30f d'interfaçage avec l'embase 2 (cf. figure 3). Dans cette pièce alvéolaire, sont prévus: des ouvertures 30b sur les faces latérales 32 pour l'insertion de la plaque métallique 50 afin de la loger dans un espace 30e s'étendant au-dessus de la paroi de fond 30f, les ouvertures latérales 30b allégeant et apportant de la souplesse à l'entretoise 30; deux ouvertures 35 dans la paroi de fond 30f aptes à collaborer avec les cadres 54 et les ouvertures 52 de la plaque métallique 50 pour une fixation sur l'embase 2, et les clips 31 pour fixer l'entretoise 30 sur la pièce de structure interne 4. Ces clips 31 (cf. figures 3 et 4) viennent de moulage depuis la paroi de prolongement 30s de l'entretoise 30. Des ouvertures 33b sont réalisées de telle manière qu'elles puissent se superposer aux ouvertures 53 de la plaque métallique 50 pour l'insertion des centreurs 33 (cf. figure 3).

Puis, en référence à la figure 5c, la plaque métallique 50 est insérée dans l'entretoise 30, les deux cadres nervurés 54 servant à positionner la plaque métallique 50. Les ouvertures 52 agencées dans la plaque métallique 50 sont alors superposées aux ouvertures 35 formées dans la paroi de fond 30f de l'entretoise 30.

L'entretoise 30 ainsi réalisée est alors utilisée dans l'assemblage des différentes pièces de la poignée de maintien 100'. La figure 5d montre une première étape d'assemblage de l'entretoise 30 sur la pièce de structure interne 4. Pour ce faire, les clips 31 de l'entretoise 30 traversent les ouvertures 40 (cf. figure 2) pratiquées dans la pièce de structure interne 4. Deux centreurs 33 traversent également des ouvertures 43 pratiquées également dans la pièce de structure interne 4.

Les étapes suivantes de cet assemblage comportent la fixation de la poignée 1 sur la paroi de fond 30f de l'entretoise 30 et de la paroi de prolongement 30s de l'entretoise 30 sur la pièce de structure interne 4, au moyen respectivement des agrafes 3 fixées par clipsage au travers des ouvertures 35, 52 de l'entretoise 30 munie de sa plaque métallique 50, et des ouvertures 41 de la pièce de structure interne 4. Le résultat de cet assemblage est représenté sur la figure 3.

L'invention n'est pas limitée aux exemples de réalisation décrits et représentés. Ainsi les différentes pièces d'accrochage, ancrage ou clipsage, peuvent être mises en œuvre indifféremment sur n'importe quelle liaison entre deux éléments de la poignée de maintien. Par ailleurs, Le nombre de centreurs peut avantageusement être supérieur à deux.

De plus, l'ordre des étapes du montage peut être modifié, par exemple la poignée 1 peut être fixée sur l'embase 2 avant que cet ensemble soit fixé sur l'entretoise 30.

## Revendications

1. Dispositif de poignée de maintien de véhicule automobile (100') composé d'une poignée (1) et d'une partie de fixation (10') comportant une embase (2) et une pièce de structure interne (4) destinée à être fixée dans une garniture de structure d'habitacle du véhicule, la partie de fixation (10') comportant également une entretoise (30) agencée entre l'embase (2) et la pièce de structure interne (4) et des moyens de fixation (3, 31) reliant une paroi de fond (30f) de l'entretoise (30) à l'embase (2) et une paroi de prolongement (30s) de l'entretoise (30) à la pièce de structure interne (4), les parois de fond (30f) et de prolongement (30s) étant distantes (H) et orientées (a) l'une par rapport à l'autre de sorte que la pièce de structure interne (4) est agencée dans une position de solidarisation compatible avec la structure d'habitacle du véhicule, des ouvertures (30b) étant formées dans des faces latérales (32) de l'entretoise (30) afin d'apporter de la souplesse à l'entretoise, dans lequel la paroi de fond (30f) de l'entretoise (30) présente des ouvertures (35) de sorte que l'embase (2) peut se clipser sur l'entretoise (30) de la même façon que l'entretoise (2) se clipse sur la pièce de structure interne (4) et en ce que l'entretoise (30) présente entre des parois de fond (30f) et de prolongement (30s) sensiblement planes une distance variable (H) et un angle (a) tels que cette distance (H) est sensiblement égale à une distance de solidarisation de la pièce de structure interne (4) définie entre un plan de solidarisation (Ls) et un plan d'interface (L) entre l'entretoise (30) et l'embase (2).

2. Dispositif de poignée de maintien selon la revendication 1, dans lequel les moyens de fixation (31) de l'entretoise (30) sur la pièce de structure interne (4) comportent des clips de fixation (31) venant de l'entretoise (30) couplés à des ouvertures (40) pratiquées dans la pièce de structure interne (4).

3. Dispositif de poignée de maintien selon l'une quelconque des revendications 1 ou 2, dans lequel l'entretoise (30) comporte également au moins un centreur (33) traversant ladite pièce de structure interne (4) par des ouvertures (43) afin de limiter la déformation de la poignée (30) jusqu'à environ 100 Kgf.

4. Dispositif de poignée de maintien selon la revendication précédente, dans lequel la distance de solidarisation est minimale entre un bord (4m) de paroi plane de fixation (40) de la pièce de structure interne (4) sur l'entretoise (30) et le plan d'interface (L).

5. Dispositif de poignée de maintien selon l'une quelconque des revendications précédentes, dans lequel l'entretoise (30) loge une plaque métallique (50) dans un espace (30e) s'étendant au-dessus de la paroi de fond (30f), cette plaquette (50) présentant des ouvertures (52) superposées aux ouvertures (35) de la paroi de fond (30f) de l'entretoise (30) de sorte que l'embase (2) est également clipsée sur la plaque métallique (50).

6. Dispositif de poignée de maintien selon l'une quelconque des revendications précédentes, dans lequel l'entretoise (30) a une structure choisie entre alvéolée, nervurée et multicouche.

7. Véhicule automobile, **caractérisé en ce qu'**il comporte au moins un dispositif de poignée de maintien (100') défini selon l'une quelconque des revendications 1 à 6.

## Patentansprüche

1. Eine Kraftfahrzeug-Haltegriff-Vorrichtung (100') bestehend aus einem Griff (1) und einem Befestigungsteil (10') mit einer Basis (2) und einem inneren Strukturteil (4) zur Befestigung in einer Fahrgastraumverkleidung, wobei das Befestigungsteil (10') auch einen zwischen der Basis (2) und Das innere Strukturteil (4) und Befestigungsmittel (3, 31), die eine Bodenwand (30f) des Steges (30) mit dem Sockel (2) und eine Verlängerungswand (30s) des Steges (30) mit dem inneren Strukturteil (4) verbinden, wobei die Boden- (30f) und Verlängerungswände (30s) sind Distanziert (H) und zueinander ausgerichtet (a), sodass das innere Strukturteil (4) in einer mit der Innenraumstruktur des Fahrzeugs kompatiblen Verbindungsposition angeordnet ist, wobei in Seitenflächen (32) des Distanzstücks (30) Öffnungen (30b) ausgebildet sind, um dem Distanzstück, in dem die Bodenwand (30) flexibel ist, Flexibilität zu verleihen 30f) des Abstandhalters (30) Öffnungen (35) aufweist, sodass der Sockel (2) auf den Abstandhalter (30) derart aufclipsbar ist, dass der Abstandhalter (2) auf den inneren Strukturteil (4) aufklippert und der Abstandhalter (30) zwischen Boden- (30f) und Verlängerungswänden aufweist (30s) im Wesentlichen eben mit einem veränderlichen Abstand (H) und einem Winkel (a), derart, dass dieser Abstand (H) im Wesentlichen gleich einem Abstand zur Verbindung des inneren Strukturteils (4) ist, der zwischen einer Verbindungsebene (LS) und einer Schnittstellenebene (L) zwischen dem Abstandshalter (30) und dem Sockel (2) definiert ist.

2. Haltegriff-Vorrichtung nach Anspruch 1, wobei die Befestigungsmittel (31) des Abstandshalters (30) am inneren Strukturteil (4) Befestigungsclips (31) von dem Abstandshalter (30) umfassen, die mit Öffnungen (40) in dem inneren Strukturteil (4) verbunden sind.

3. Haltegriff-Vorrichtung nach einem der Ansprüche 1 oder 2, wobei der Abstandshalter (30) ferner mindestens einen Zentrierer (33) aufweist, der durch Öffnungen (43) das innere Strukturteil (4) durchquert, um die Verformung des Griffs (30) auf etwa 100 Kgf zu begrenzen.

4. Haltegriff-Vorrichtung nach dem vorhergehenden Anspruch, wobei der Verbindungsabstand zwischen einem Rand (4m) einer ebenen Befestigungswand (40) des inneren Strukturteils (4) auf dem Abstandshalter (30) und der Grenzflächenebene (L) minimal ist.

5. Haltegriff nach einem der vorhergehenden Ansprüche, bei dem der Abstandshalter (30) eine Metallplatte (50) in einem Raum (30e) aufnimmt, der sich über der Bodenwand (30f) erstreckt, wobei der Abstandshalter (50) Öffnungen (52) aufweist, die den Öffnungen (35) der Bodenwand (30f) des Halters überlagert sind Abstandhalter (30) derart, dass der Sockel (2) auch auf die Metallplatte (50) geklipst ist.

6. Haltegriff-Vorrichtung nach einem der vorhergehenden Ansprüche, wobei der Abstandshalter (30) eine Struktur aufweist, die aus Wabenstruktur, Rippenstruktur und Mehrschichtstruktur ausgewählt ist.

7. Kraftfahrzeug, **dadurch gekennzeichnet, dass** es mindestens eine Haltegriff-Vorrichtung (100') aufweist, die nach einem der Ansprüche 1 bis 6 definiert ist.

## Claims

1. Motor vehicle maintenance handle (100') consisting of a handle (1) and a fastening part (10') consisting of a base (2) and an internal structure part (4) intended to be fastened in a vehicle interior structure trim, the fastening part (10') also comprising a spacer (30) arranged between the base (2) and the inner structural part (4) and means of attachment (3, 31) connecting a bottom wall (30f) of the spacer (30) to the base (2) and an extension wall (30s) of the spacer (30) to the inner structural part (4), the bottom walls (30f) and the extension walls (30f) 0s) being distant (H) and oriented () from each other so that the internal structural part (4) is arranged in a position of solidarity compatible with the vehicle's passenger compartment structure, openings (30b) being formed in lateral faces (32) of the spacer (30) in order to provide flexibility in the spacing, where the bottom wall (30f) of the spacer (30) has openings (35) so that the base (2) can be clipped on the spacer (30) in the same way that the spacer (2) clips on the inner structural part (4) and the spacer (30) has walls between In the background (30f) and in the extension (30s), a variable distance (H) and angle (), such that this distance (H) is approximately equal to a distance from the inner structural part (4) defined between a drawing (LS) and an interface plane (L) between the spacer (30) and the base (2).

2. A holding handle device according to Claim 1, in which the means of attachment (31) of the spacer (30) on the internal structure part (4) include attachment clips (31) from the spacer (30) coupled with openings (40) in the internal structure part (4).

3. A holding handle device according to any of claims 1 or 2, in which the spacer (30) also includes at least one center (33) through the said internal structure part (4) with openings (43) to limit the strain of the handle (30) up to approximately 100 Kgf.

4. A holding handle device according to the previous claim, in which the distance of the coupling is minimal between a plane wall attachment edge (40) of the inner structural part (4) on the spacer (30) and the interface plane (L).

5. A holding handle device according to any of the preceding claims, in which the spacer (30) holds a metal plate (50) in a space (30e) extending over the bottom wall (30f), this plate (50) having openings (52) superimposed on openings (35) of the bottom wall (30f) of the wall spacing (30) so that the base (2) is also split on the metal plate (50).

6. A holding handle device in accordance with any of the preceding claims, in which the spacer (30) has a chosen structure between balneolate, veined and multilayer.

7. Motor vehicle, **characterized by** having at least one holding handle device (100') defined according to any claim 1 to 6.
